# EUROPEAN PATENT APPLICATION

(11) **EP 3 067 833 A1**
(43) Date of publication of application: **14.09.2016**
(21) Application number: 14860883.9
(22) Date of filing: 27.02.2014
(51) Int. Cl.: G06K 17/00

(54) **CARD READER, TERMINAL, AND PAYMENT INFORMATION PROCESSING METHOD USING SAME**

(30) Priority: 08.11.2013 KR 20130135784
(71) Applicant: Korea Information & Communications Co., Ltd., Seoul 100-743 (KR)
(72) Inventor: YOUN, Sang Jin, Seoul 136-749 (KR)
(74) Representative: Schwarz & Partner
(86) International application number: PCT/KR2014/001605
(87) International publication number: WO 2015/068904

(57) **Abstract**

Disclosed herein are a card reader, a terminal and a method for processing payment information using the same, wherein the card reader may include a connector which is connected communicable with an external terminal; a reader unit which is configured to obtain an IC card (Integrated Circuit Card) information; a layer configuration unit wherein a key input layer wherein a plurality of keys are disposed for password inputs, is randomly formed; an interface unit which is able to transmit the information on the randomly formed key input layer to the external terminal via the connector and receive from the external terminal the position information corresponding to the inputted IC card password at the key input layer; and a password detection unit which is employed to process the received position information and detect the password inputted from the external terminal.

## Description

### BACKGROUND

### Technical Field

The present invention relates to a method for processing a payment information in such a way to use a card reader which is connectable to a terminal, for example, a cellular phone, etc.

### Background Art

A card payment terminal, in general, is equipped with a magnetic stripe reader (MSR) which is able to read a card information encoded on a magnetic stripe of a card. The card information which was read by the aforementioned magnetic stripe reader is formed in an analog signal type which means a plain text message information state which is not encoded.

Moreover, an IC card typically called a smart card is equipped with a microprocessor and a memory and may be a payment means which is able to minimize any risk to counterfeit and falsification of a magnetic card since information can be stored or processed in a card, while providing a variety of services. Such an IC card is able to carry out various additional functions which require a separation information storing function since it has a large storage capacity as compared to a conventional magnetic card and is able to advantageously improve any security functions.

The IC card may be categorized into a contact type card and a non-contact type card based on the method of use. The IC card on the front side of which a metallic pattern is formed, is referred to a contact type IC card which is most widely being used, and the non-contact type card is equipped with a module and an antenna which are employed for a wireless communication, wherein a card information can be read via an IC card reader provided at a card payment terminal.

The aforementioned card payment terminal is connected to a relay server or a VAN company's server via an on/off exclusive line, thus carrying out a credit card payment service. In recent years, a need for carrying out a credit card payment service in cooperation with a typical mobile terminal, not an exclusive payment terminal, is increasing.

### SUMMARY OF THE DISCLOSURE

### Technical Problem

Accordingly, it is an object of the present invention to provide a card reader, a terminal and a method for processing a payment information by using the same which are able to improve security with respect to a card-related information.

### Technical Solution

To achieve the above object, according to embodiment of the present invention, there is a card reader which may include, but is not limited to, a connector which is connected communicable with an external terminal; a reader unit which is configured to obtain an IC card (Integrated Circuit Card) information; a layer configuration unit wherein a key input layer wherein a plurality of keys are disposed for password inputs, is randomly formed; an interface unit which is able to transmit the information on the randomly formed key input layer to the external terminal via the connector and receive from the external terminal the position information corresponding to the inputted IC card password at the key input layer; and a password detection unit which is employed to process the received position information and detect the password inputted from the external terminal.

According to another embodiment of the present invention, there is provided a terminal, which may include, but is not limited to, a connection port which includes at least one terminal connected to a card reader which is provided to obtain magnetic card information and IC card information; an interface unit which is configured to receive from the card reader information on a key input layer via the connection port, wherein the key input layer is randomly formed, transmit to the card reader a position information corresponding to an inputted IC card password at the key input layer, and receive from the card reader a transaction approval request text message including the password detected using the transmitted position information; and a communication module which is able to transmit the received transaction approval request text message to a relay server provided for card payment.

According to further another embodiment of the present invention, there is provided a method for processing a payment information by using a card reader formed of a connector connected communicable with an external terminal, and a reader unit for obtaining a card information, which may include, but is not limited to, a step wherein a key input layer wherein a plurality of keys are arranged for password inputs, is randomly formed and is transmitted to the external terminal; a step wherein a position information on an inputted IC card password at the key input layer is received from the external terminal; a step wherein a password inputted from the external terminal is detected by processing the received position information; and a step wherein a transaction approval request text message including the detected password is generated and transmitted to the external terminal.

Meanwhile, the aforementioned method for processing a payment information may be implemented with a recording medium which is readable by a computer having a program configured to execute it at the computer.

### ADVANTAGEOUS EFFECTS

According to an embodiment of the present invention, a key input layer configured for a password input at a card reader when inputting and processing a card password can be randomly constituted and transferred to a terminal, and the terminal is configured to transfer, to the card reader, only the position information of the password inputted at the terminal, whereby any security related with the payment information can be enhanced by preventing the leakage of the password.

### BRIEF DESCRIPTION OF THE DRAWINGS

Figure 1 is a view illustrating a system configuration so as to describe a payment method of a terminal by using a card reader according to an embodiment of the present invention;
Figure 2 is a perspective view for describing an embodiment of a connection method of a mobile terminal and a card reader according to the present invention;
Figure 3 is a block diagram illustrating the configuration of a terminal according to an embodiment of the present invention;
Figure 4 is a block diagram illustrating the configuration of a card reader according to an embodiment of the present invention;
Figure 5 is a flow chart for describing a method for processing a payment information according to an embodiment of the present invention;
Figure 6 is a timing view for describing an embodiment with respect to the operations of a card reader, a terminal and relay server which are employed to process an IC card payment information;
Figure 7 is a view illustrating an example of a key input layer constituted for a password input;
Figure 8 is a graph for describing an example with respect to a position information of an inputted password; and
Figure 9 is a timing view for describing an embodiment with respect to the operations of a card reader, a terminal and a relay server which are employed to process a magnetic card payment information.

### DETAILED DESCRIPTION

The preferred embodiments of the present invention will be described with reference to the accompanying drawings.

First of all, the terms used throughout the specification of the present invention will be defined before the embodiments of the present invention are described.

The term "terminal" used in the specification may include any of a cellular phone, a smart phone, a laptop computer, a terminal for a digital broadcasting, a PDA (Personal Digital Assistants), a PMA (Portable Multimedia Player), a navigation device, etc., but in the present invention, such a term is not limited thereto, and the terminal may be any of various devices which could provide a user's input and information display function.

The term "relay server" has been used as a VAN company's server which is able to relay a credit card electronic payment, but is may be any of various servers related with a credit card electronic payment, and for a specific function, an actual payment function and other additional functions may be separated in the types of separate servers.

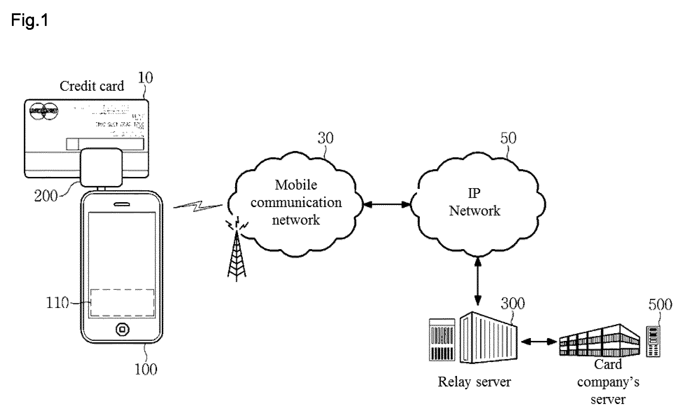

Figure 1 is a view illustrating the configuration of a terminal payment system using a card reader according to an embodiment of the present invention.

The electronic payment system according to an embodiment of the present invention may include, but is not limited to, a terminal 100, a card reader 200, a relay server 300 and a card company's server 500.

The terminal 100 may be a cellular phone which is able to carry out, for example, a wireless communication via an ordinary mobile communication network 30 and may transmit and receive any of various message services, for example, a SMS (Short Message Service), a MMS (Multimedia Messaging Service), an e-mail message, etc.

Moreover, the terminal 100 may be a PDA (Personal Digital Assistant) which is able to transmit or receive data to/from an IP (Internet Protocol) network 50, for example, an internet connection, by connecting to a mobile communication network 30.

The relay server 300 may be a server of a VAN (Value Added network) company which provides a payment proxy service at an electronic payment system which uses a credit card 10.

The present invention, however, is not limited thereto. For example, the relay server 300 may be a server which is able to relay only the purchase of slips except for the server which is able to provide a payment service or various types of servers which are simply connected to the server of an ordinary card company. Moreover, the card company's server 500 means a server of the card company which has issued the credit card 10.

The terminal 100 of a seller illustrated in Figure 1 according to an embodiment of the present invention is used connected to the card reader 200. The card reader 200 may have a structure wherein it is inserted into a connection port provided with an earphone and microphone connection terminal of the terminal 100.

The terminal 100 is equipped with a payment program 110 which may be used during the card payment via the card reader 200. The credit payment process can be carried out in such a way to request an approval by transmitting a transaction approval request message to the relay server 300 via the payment program 110.

The terminal 100 is able to generate a message including a receipt related with a transaction approval or a cancellation, and a message including a receipt related with an issuance or a cancellation of a cash receipt and send it to a purchaser's terminal in case of the transaction approval or cancellation which can be carried out using the payment program 110.

The relay server 300 illustrated in Figure 1 according to an embodiment of the present invention may be configured to previously receive, from a franchisee, the information of a seller who uses the terminal 100 and store the received information. The seller's information may include a seller's telephone number, the name of the seller, the name of the franchisee to which the seller belongs, a business registration number, etc.

Moreover, the relay server 300 may manage a corresponding seller and a transaction information of a franchisee by assigning an identification number by seller or franchisee. The relay server 300 may be directly managed by the VAN company and the transaction information of the seller or the franchisee can be managed by an additional server. Furthermore, the relay server 300 may provide a payment program 110 provided at the terminal 100 of the seller.

The payment program 110 according to an embodiment of the present invention is able to provide to the terminal 100 of the seller using, for example, a VM (Virtual Machine) download method. For this, the relay server 300 may transmit a call back type message to the terminal 100 of the seller for a VM download.

Thereafter, if a previously set password is received from the terminal 100 of the seller who has received the call back type message, the payment program 110 will be transmitted to the terminal 100 of the seller.

Moreover, if the payment program 110 has been already installed at the terminal 100 of the seller, the VM download process may be omitted. When paying with the credit card 10, the signature of the purchaser can be received from a touch pad installed at the terminal 100 of the seller, and the signature information may be transmitted to the relay server 300 together with a transaction approval request message.

While the provision of the payment program 110 has been described as using the VM download method, it refers to just an example. It is obvious that the payment program 110 may be transmitted to the terminal 100 of the seller by using a variety of known program transmission methods.

For example, the seller may make an access to an open application market, for example, an associated side on the internet, an android market or an app store and input the information of a seller and a seller's terminal, thus subscribing as a member and downloading on the web the payment program 110 after a predetermined approval procedure.

The upload, update information or other managements of the payment program 110 may be carried out at the relay server 300 or other types of servers.

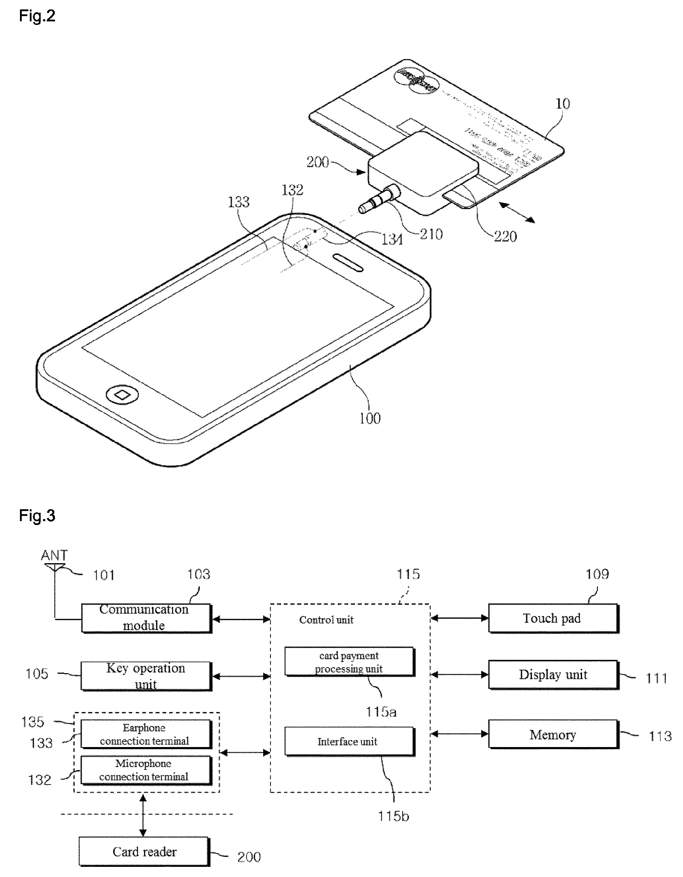

An embodiment on the connection relationship and each configuration between the terminal 100 and the card reader 200 will be described in detail with reference to Figures 2 to 4.

Referring to Figure 2, the card reader 200 is inserted in an insertion groove 134 of the terminal 100, whereby the card reader 200 can be connected to a connection port including the earphone connection terminal 133 and the microphone connection terminal 132.

The card reader 200, for example, can be electrically connected to the connection port including the earphone connection terminal 133 and the microphone connection terminal of the terminal 100 via a connector 210, and each card reader 200 is given an ID for identification, thus effectively managing the transaction information with a corresponding terminal 100.

Moreover, a magnetic stripe reader (MSR) for detecting and reading the card information recorded on the magnetic portions of the credit card 10 may be provided inside the housing of the card reader 200. In the embodiment in Figure 2, it is hypothesized that the MSR is provided at the card reader 200, thus reading the card information from the magnetic type credit card 10.

The credit card 10 is inserted in the card insertion groove 220 of the card reader 200 and slides therein, whereby the card information can be read by the MSR. A card insertion groove 220 for receiving the credit card 10 therein is formed on one surface of the card reader 200, and it is configured so that the credit card 10 is inserted into the card insertion groove 220 and slides therein so as to read the card information of the credit card 10.

Moreover, the card information read by the card reader 200 can be received via the microphone connection terminal 132 of the terminal 100 and can be transmitted to a control unit (which will be described later) of the terminal 100. The control unit of the terminal 100 may generate a transaction approval request text message using the corresponding card information and the payment program 110 and transmit it to the relay server 300 via the mobile communication network 30.

Here, the card information read by the card reader 200 will be transmitted to the control unit of the terminal 100 via the connector 210 of the card reader 200 and the microphone connection terminal 132.

The card reader 200 according to an embodiment of the present invention is able to read the card information of the credit card 10 of the magnetic method as well as the card information of the credit card made in the form of the non-contact type card of the RF method or the contact type IC card. For this, a reader unit (not illustrated) provided at the card reader 200 and employed to read the card information may include an IC card reader for reading the magnetic stripe reader (MSR) and the IC card information.

For example, in case of the non-contact type IC card, the IC card reader provided at the card reader 200 so as to read the card information may include a RF communication module.

The IC card may be a card equipped with an IC chip made in compliance with the EMV standard and the application thereof, wherein the EMV standard means an international standard on the credit and cash transactions jointly made by the card companies, for example, Europay, MasterCard and Visa, namely, it means a standard on the transactions which are carried out using the smart card.

In case of the IC card, the card reader 200 will read various information of a customer's card via the communication with the credit card 10, and if other necessary information (a payment amount, a password, etc.) are inputted, the card reader 200 will determine that which method among the offline approval method, the offline disapproval method and the online method will be requested for transaction, and a result thereof will be transmitted to the credit card 10.

The credit card 10 may check the request from the card reader 200 and may respond to the card reader 200 after determining any of the offline approval, the offline disapproval, the referral and the online.

The card reader 200 will carry out any of the offline approval, the offline disapproval and the referral based on a response from the credit card 10, and in case of the online, the card reader 200 may transmit a transaction approval request text message to the relay server 300 via the terminal 100.

The relay server 300 may transmit the transaction approval request text message to the card company's server 500, and the card company's server 500 may transmit a response text message including the approval or disapproval to the relay server 300, and the response text message may be transmitted to the card reader 200 via the terminal 100.

The card reader 200 may finally request to the credit card 10 based on the approval or disapproval on the received response text message, and the credit card 10 may check the request from the card reader 200 and then may finally respond about the approval or disapproval, and the card reader 200 may approve or disapprove the transaction based on the response from the credit card 10.

Figure 3 is a block diagram illustrating the configuration of the terminal 100 according to an embodiment of the present invention.

Referring to Figure 1, the terminal 100 may be configured in such a way that the payment program 110 is installed at the terminal, and the card reader 200 is connected to the connection port 135 including the earphone connection terminal 133 and the microphone connection terminal 132.

The terminal 100 may include, but is not limited to, an antenna 101, a communication module 103, a key operation unit 105, a connection port 135 formed of an earphone connection terminal 133 and a microphone connection terminal 132, a touch panel 109, a display unit 111, a memory 113, and a control unit 115 wherein a payment program 110 is installed.

The communication module 103 may include a modem which is able to encode or modulate the signal to be transmitted, and demodulate and decode the signal received, and a RF front end employed to process RF signals.

The key operation unit 105 may include selective 10 keys for inputting telephone numbers, depending on the provision of the touch pad 109. If the telephone number and the signature information for card payment are inputted via the touch pad 109, the key operation unit 105 may be equipped with only minimum function keys, for example, for on/off operations of electric power. The key operation unit 105 and the touch pad 109 will be collectively called a key input unit throughout the specification.

Moreover, the control unit 115 may include a card payment processing unit 115a and an interface unit 115b.

The card payment processing unit 115a is employed to transmit the card information from the card reader 200 to the relay server 300 via the communication module 103 and carry out the services based on the typical credit card electronic payment method.

The card payment processing unit 115a may transmit an authentication information to the card company's server 500 for safety during transaction before the transaction approval request text message and the electronic signature information are transmitted to the relay server 300. The authentication information may include a PIN (Personal Identification Number) information of the card of the purchaser.

The card company's server 500 that has received the PIN information from the terminal 100 may receive a password corresponding to the PIN information and check the authenticity thereof and inform any availability of the card to the terminal 100 and then authenticate the card payment. Since the approval for the use of the card is determined only in case that the PIN information, for example, a password, is inputted during the card payment, it is possible to prevent any card payment after the card is stolen.

The authentication on the PIN information may be carried out at the card company's server 500 or the relay server 300 or may be carried out at a separate authentication server. The aforementioned authentication procedure on the PIN information will be employed in case of the use of the IC (Integrated Circuit) card, and the PIN information is encoded and stored in the IC card.

The card payment processing unit 115a may receive a transaction approval result text message transmitted from the card company's server 500 via the relay server 300 and may output it on the display unit 111.

If the terminal 100 is equipped with the touch pad 109 as the key input unit, the signature of the purchaser may be inputted via the touch pad 109, and the card payment processing unit 115a may generate the inputted signature of the purchaser into a signature information for card payment, and if the terminal 100 is not equipped with the touch pad 109, the input of the signature may be omitted during the card payment of the purchaser.

The card payment processing unit 115a may encode the transaction approval request text message including the payment request information for the safe credit card payment, and the signature information and may transmit to the relay server 300.

Moreover, the card payment processing unit 115a may store on memory(113) the contents of the credit card payment and may summarize it based on the payment date, amount, purchaser, etc. if the user request, and may output it on the display unit 111 or may transmit the information of the summarized contents of the credit card payment to the purchaser's terminal in the form of message.

Furthermore, the control unit 115 may control the rests of the components, more specifically, may control the whole operations of the antenna 101, the wireless communication module 103, the key operation unit 105, the connection port 135 including the earphone connection terminal 133 and the microphone connection terminal 132, the touch pad 109, the display unit 111, and the memory 113.

The interface unit 115b may transmit or receive the data with the card reader 200 via the connection port 135 including the microphone connection terminal 132 and the earphone connection terminal 133.

For this, the interface unit 115b may include an analog-digital converter for converting an analog signal received via the microphone connection terminal 132 into a digital signal, and a digital-analog converter for converting an encoding key into an analog signal and transmitting it to the earphone connection terminal 133.

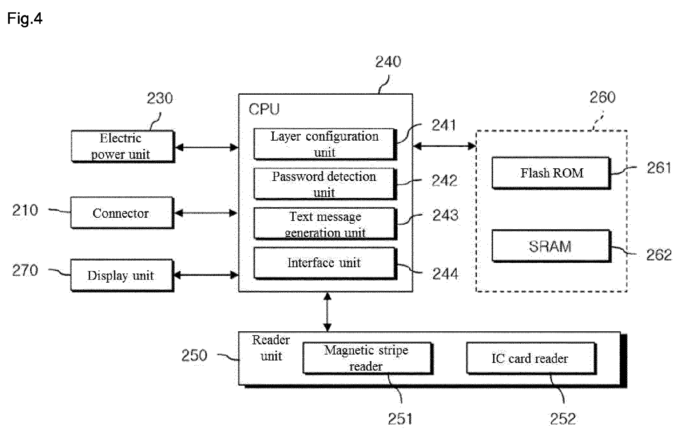

Figure 4 is a block diagram illustrating the configuration of a card reader 200 according to an embodiment of the present invention.

Referring to Figure 4, the card reader 200 may include a connector 210, an electric power unit 230, a central processing unit (CPU) 240, a reader unit 250, a memory unit 260 and a display unit 270.

The central processing unit 240 may include a layer configuration unit 241, a password detection unit 242, a text message generation unit 243 and an interface unit 244.

The connector 210 is attached to a main body of the card reader 200 and is configured to exchange the information necessary for the credit card payment with the terminal 100 via the connection port 135 including the microphone connection terminal 132 or the earphone connection terminal 133 of the terminal 100.

Moreover, the electric power unit 230 is able to supply electric power to each component of the card reader 200.

The layer configuration unit 241 may include a key input layer wherein a plurality of keys are randomly arranged for a password input of the credit card 10.

For example, in case of the IC card, the input of a PIN (Personal Identification Number) is necessary. For this, the layer configuration unit 241 may randomly arrange the keys on the screen, wherein the keys are used for a user to input a password at the terminal 100.

The interface unit 244 is able to transmit the information on the key input layer to the terminal 100 via the connector 210, and the interface unit 115b of the terminal 100 is able to receive the information on the key input layer via the connection port 135.

The terminal 100, thereafter, may display on the screen provided for the card password input, by using the information on the key input layer received via the display unit 111, and numeral keys are randomly disposed on the password input screen for the password input.

If the user inputs the PIN using the password input screen of the terminal 100, the information on the password inputted via the interface unit 115b and the connection port 135 of the terminal can be transmitted to the card reader 200.

According to the embodiment of the present invention, the password information transmitted to the card reader 200 may be a position information on the inputted password, not the password itself, and more specifically, it may be a coordinate information on the points where the user has contacted for the input of the password at the password input screen of the terminal 100.

Moreover, the password detection unit 242 may process the password position information (for example, a contact point coordinate information received from the terminal 100 and may detect the password that the user has inputted at the terminal 100.

According to an embodiment of the present invention, the card reader 200 may randomly constitute the key input layer for the password input and may transmit it to the terminal, and the terminal 100 may transmit only the position information of the inputted password to the card reader, whereby the security of the payment information can be enhanced by preventing any leakage of the password.

The interface unit 244 may receive via the connector 210 the payment amount information inputted at the terminal 100.

The text message generation unit 243 may generate a card information obtained via the reader unit 250, a payment amount information received from the terminal 100, and a transaction approval request text message including the password detected by the password detection unit 242.

The reader unit 250 may include a magnetic stripe reader (MSR) 251 for reading the information of the magnetic card, and an IC card reader 252 for reading the information of the IC card.

The transaction approval request text message may be generated in compliance with the EMV (Europay MasterCard Visa) standard.

The memory unit 260 may include a memory, for example, a flash ROM 262, a SRAM 262, etc. The memory unit 260 may store a first encoding key (hereinafter, referred to "a basic encoding key" which is necessary when encoding, a card information of the credit card 10 processed by the payment control unit 241, a payment information or an exclusive identification information of a corresponding card reader 200.

The display unit 270 may be configured to inform the current state of the card reader 200 by emitting light via a red color LED or a blue color LED or provide a sign which says that the payment is available, by generating a specific signal sound, for example, a "beep" sound.

The central processing unit 240 may control the whole operations of the rests of the components, more specifically, the whole operations of the connector 210, the electric power unit 230, the magnetic stripe reader (MSR) 250, the memory unit 260 and the display unit 270.

The information transmitted and received between the card reader 200 and the terminal 100 may be transmitted in encoded states, and the information may be used after it is decoded at the receiving side.

The electric power unit 230 may include a battery and a switching unit. The switching unit 232 may be formed of a bipolar transistor, a MOS transistor or other switching elements and is able to selectively supply electric power to each component of the card reader 200 in accordance with a detection signal from the connector 210.

If the card reader 200 and the terminal 100 are connected to each other, the detection signal of the terminal 100 can be transmitted to the switching unit via the connector 210. If the detection signal is activated, the switching unit may be turned on, so the electric power received from the battery can be supplied to each component of the card reader 200. What the detection signal is activated, may mean that the detection signal has a voltage level which is over a predetermined voltage level.

In a state where the card reader 200 and the terminal 100 are not connected, separated, the detection signal of the terminal 100 is not transmitted to the switching unit via the connector 210. For this reason, if the detection signal is not activated, the switching unit may be turned off, and the supply of the electric power received from the battery may be interrupted.

In the standby mode, the card reader 200 may remain in a turned-off state since the electric power is not supplied from the electric power unit 230.

The connection port 135 including the microphone connection terminal 132 and the earphone connection terminal 133 of the terminal 100 may remain in a predetermined state wherein a predetermined voltage (2V) is activated so as to transmit or receive an audio signal.

If the card reader 200 is inserted in the terminal 100, the aforementioned constant voltage (2V) may be transmitted to the connector 210 as a detection signal. The switching unit may be turned on if the detection signal becomes over a predetermined voltage and then becomes a level over a threshold voltage of the transistor, thus supplying the electric power of the battery to each component.

The card reader 200 according to an embodiment of the present invention may provide to effectively reduce unnecessary power consumption of the battery 231 in the standby mode.

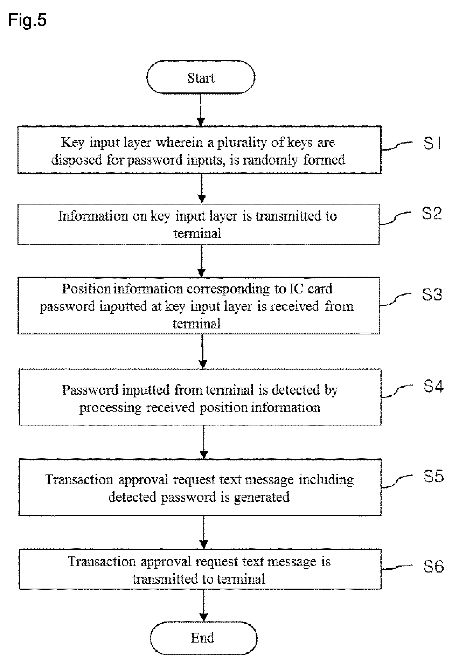

Figure 5 is a flow chart for describing a payment information processing method according to an embodiment of the present invention, and the aforementioned method for processing the payment information will be described with reference to the block diagram which illustrates the configuration of the card reader 200 according to an embodiment of the present invention.

Referring to Figure 5, the layer configuration unit 241 of the card reader 200 may randomly form a key input layer wherein a plurality of keys are randomly disposed for password inputs (Step S1), and the interface unit 244 may transmit to the terminal 100 the information on the randomly formed key input layer via the connector 210 (Step S2).

Thereafter, the interface unit 244 may receive, via the connector 210, a position information on the IC card password inputted at the terminal 199 by using the transmitted key input layer, from the terminal 100 (Step S3).

The password detection unit 242 may process the position information received from the terminal 100 and detect the password inputted by the user at the terminal 100 (Step S4).

Moreover, the text message generation unit 243 may generate a transaction approval request text message including the detected password and transmit it to the terminal 100 via the interface unit 244 and the connector 210.

The interface unit 244 may receive the information on the payment amount inputted at the terminal 100, from the terminal 100 via the connector 210.

In this case, the transaction approval request text message generated by the text message generation unit 243 may be generated in compliance with the EMV standard to include the password detected by the password detection unit 242, the IC card information obtained from the reader unit 250, and the payment amount information received from the terminal 100.

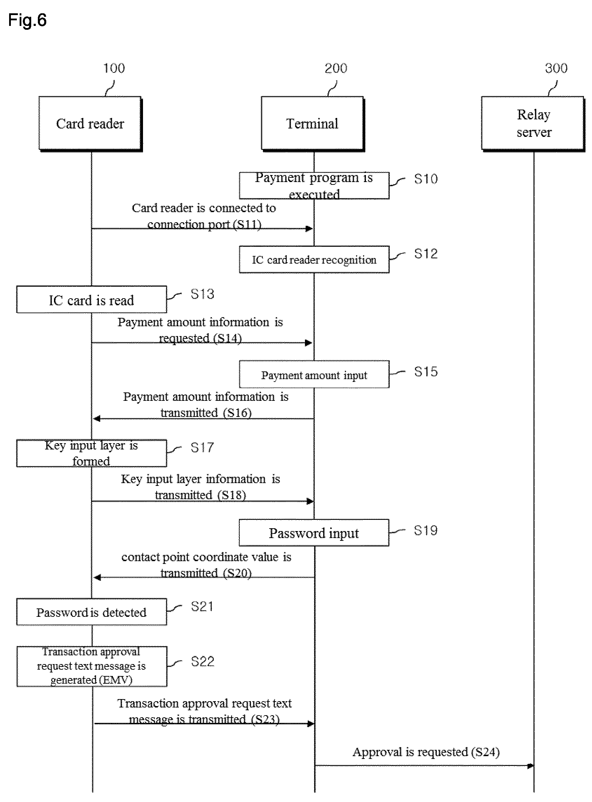

The embodiments of the method for processing payment information according to the present invention will be described in detail with reference to Figures 6 to 9.

Figure 6 is a timing view for describing an embodiment on the operations of the card reader, the terminal and the relay server which are all provided to process the IC card payment information.

Referring to Figure 6, the terminal may execute the payment program 100 so as to process the payment of the credit card (Step S10).

The connector 210 of the card reader 200 is connected to the insertion groove 134 formed at the connection port 135 including the earphone connection terminal 133 and the microphone connection terminal 132 of the terminal 100 in order for the seller to sell items and services (Step S11).

While it has been described that the card reader 200 is connected to the terminal 100 after the payment program 110 has been executed, the payment program 110 may be executed after the card reader 200 has been connected to the terminal 100.

The terminal 100 may recognize the magnetic stripe reader 251 and the IC card reader 252 of the card reader 200 via the microphone connection terminal 132.

Thereafter, if the seller inserts the IC card 10 into the card reader 200 or contacts it close to the card reader 200, the IC card reader 252 of the card reader 200 may read the card information of the IC card 10 (Step S13).

The interface unit 244 may transmit the message requesting the information on the amount to be paid using the IC card 10, to the terminal 100 via the connector 210 (Step S14), and the terminal 100 may receive the payment amount from the user in response thereto (Step S15), and may transmit the information on the inputted payment amount to the card reader 200 via the connection port 135.

The layer configuration unit 241 may randomly form the key input layer wherein a plurality of keys are disposed for password inputs (Step S17), and the interface unit 244 may transmit the information on the randomly formed key input layer to the terminal (Step S18).

The terminal 100 may display on the display unit 111 the screen at which the user is able to input the IC card password by using the key input layer information received from the card reader 200 and may receive the password from the user (Step S19).

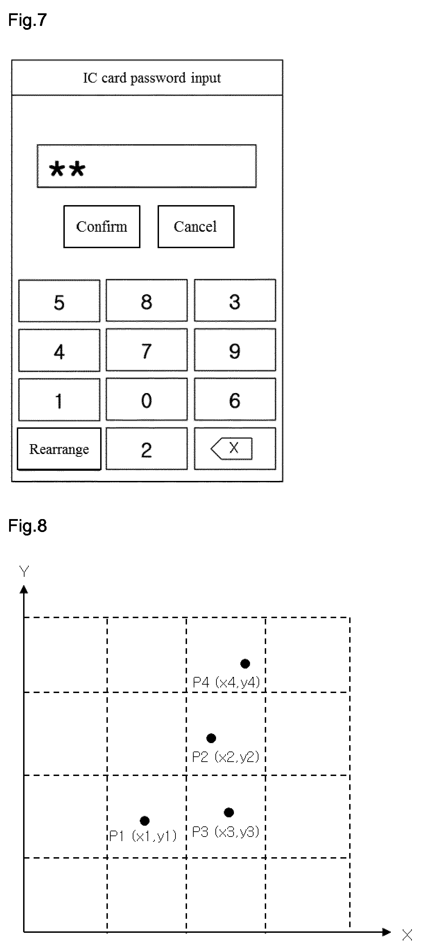

Figure 7 is a view illustrating an example of the configuration of a password input screen displayed on the terminal 100 by using the key input layer, wherein numeral keys are randomly disposed at the screen for password inputs.

As illustrated in Figure 7, the arrangement of the numeral keys is determined by the key input layer which is randomly formed by the layer confirmation unit 241 of the card reader 200. For example, the layer configuration unit 241 may randomly form the key input layer by using the random numbers which have been generated by a random number generator, etc. and may provide them to the terminal 100.

The interface unit 115b of the terminal 100 may transmit the contact point coordinate value of the inputted password to the card reader 200 via the connection port 135 (Step S20).

Referring to Figure 8, the touch pad 109 of the terminal 100 is able to recognize the coordinate values (x1, y1), (x2, y2), (x3, y3), and (x4, y4) corresponding to the contact points (P1 to P4) that the user have touched and inputted at the password input screen as illustrated in Figure 7.

In this case, the coordinate values (x1, y1), (x2, y2), (x3, y3), and (x4, y4) of the contact points may be inputted into the control unit 115 and may be transmitted to the card reader 200 via the interface unit 115b and the connection port 135.

The password detection unit 242 may detect the password that the user has inputted at the terminal 100, using the coordinate values received from the terminal 100 (Step S21). More specifically, the password detection unit 242 may confirm the password in such a way to combine the key input layer which has been randomly formed in the step S17 and the password coordinate values received from the terminal 100.

Thereafter, the text message generation unit 243 may generate, in compliance with the EMV standard, a transaction approval request text message which is formed of IC card information obtained by the reader unit 250 in the step S13, a payment amount information received from the terminal 100 in the step S16, and a password detected in the step S21 (Step S22).

The interface unit 244 may transmit the transaction approval request text message to the terminal 100 via the connector 210 (Step S23), and the terminal 100 may request an approval to the relay server 300 using the transaction approval request text message via the communication module 103 (Step S24).

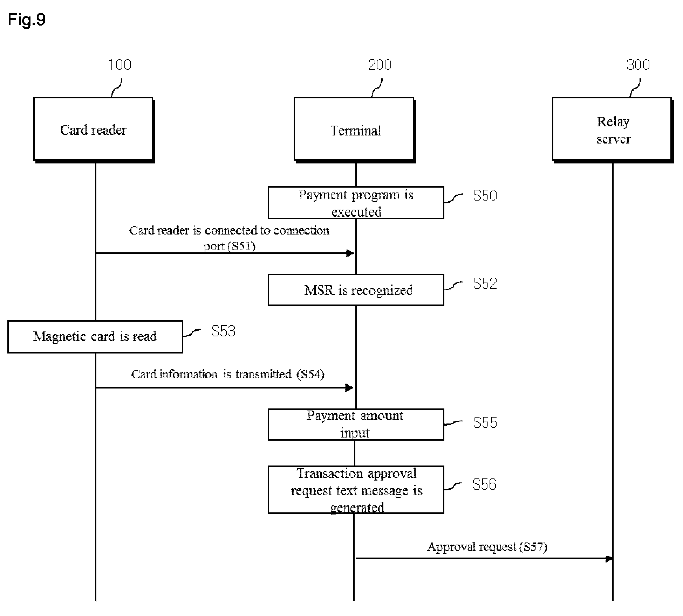

Figure 9 is a timing view for describing an embodiment of the operations of the card reader, the terminal and the relay server which are all employed to process the magnetic card payment information.

Referring to Figure 9, the terminal 100 may execute the payment program 100 for processing the payment of the credit card (Step S50).

The connector 210 of the card reader 200 is connected to the insertion groove 134 formed at the connection port 135 including the earphone connection terminal 133 and the microphone connection terminal 132 of the terminal 100 in order for the seller to sell items and services (Step S51).

The terminal 100 may recognize the magnetic stripe reader (MSR) 251 of the card reader 200 via the microphone connection terminal 132.

If the seller slides the magnetic card 10 through the card insertion groove 220 of the card reader 200, the card reader 200 may read the card information of the magnetic card 10 (Step S53).

The interface unit 244 may transmit the magnetic card information obtained in the step S53 to the terminal 100 via the connector 210 (Step S54).

Thereafter, the terminal 100 may receive the payment amount from the user (Step S55), and then may generate a transaction approval request text message including the card information received from the card reader 200, and the payment amount information inputted in the step S55 (Step S56).

The terminal 100 may request an approval to the relay server 300 via the communication module 103 by using the generated transaction approval request text message (Step S57).

The method for processing the payment information according to the present invention may be manufactured in the form of a program which is executable by the computer and can be stored in a recording medium readable by the computer. The recording medium readable by the computer may be any of a ROM, a RAM, a CD-ROM, a magnetic tape, a floppy disc, an optic data storage device, etc. It may be implemented in the form of a carrier wave (for example, a transmission on the internet).

The recording medium readable by the computer may be stored in the form of codes which are distributed over computer systems which are connected via a network and are readable by the computer in the distribution way. Moreover, a functional program, codes, and code segments configured to implement the method of the present invention may be easily drawn by programmers in the technical field which belongs to the present invention.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A card reader, comprising:
a connector connected with an external terminal;
a reader unit configured to obtain an IC card (Integrated Circuit Card) information;
a layer configuration unit configured to randomly form a key input layer wherein a plurality of keys are arranged for password inputs;
an interface unit configured to transmit the information of the randomly formed key input layer to the external terminal via the connector and receive from the external terminal the position information on the key input layer corresponding to a password of the IC card; and
a password detection unit configured to detect the password inputted from the external terminal by processing the received position information.

2. The reader of claim 1, wherein the position information is a coordinate information corresponding to a point where a user has contacted for password inputs at a screen of the external terminal wherein the key input layer is displayed.

3. The reader of claim 1, wherein the interface unit is further configured to receive a payment amount information from the external terminal.

4. The reader of claim 3, further comprising a text message generation unit which is configured to generate, in compliance with an EMV (Europay MasterCard Visa) standard, a transaction approval request text message which is formed of the obtained IC card information, the detected password, and the received payment amount information, wherein the generated transaction approval request text message is transmitted to a relay server for a card payment via the external terminal.

5. The reader of claim 1, wherein the card reader comprises a magnetic stripe reader for obtaining magnetic card information.

6. The reader of claim 5, wherein the obtained magnetic card information is transmitted to the external terminal, and the transaction approval request text message including the magnetic card information and the payment amount information is transmitted to the relay server for card payment after it has been generated by the external terminal.

7. A terminal, comprising:
a connection port which includes at least one terminal connected to a card reader which is provided to obtain magnetic card information and IC card information;
an interface unit which is configured to receive from the card reader information on a key input layer via the connection port, wherein the key input layer is randomly formed, transmit to the card reader a position information on the key input layer corresponding to a password of an IC card inputted, and receive from the card reader a transaction approval request message including the password detected using the transmitted position information; and
a communication module which is able to transmit the received transaction approval request message to a relay server provided for card payment.

8. The terminal of claim 7, further comprising:
a display unit which is employed to provide a screen for password inputs using a key input layer received from the card reader, and the position information is a coordinate information corresponding to a point where a user has contacted at the password input screen.

9. The terminal of claim 7, wherein the interface unit is able to transmit the payment amount information to the card reader, and the transaction approval request text message received from the card reader is generated, in compliance with the EMV standard, to include the obtained IC card information and the transmitted payment amount information, together with the password.

10. A method for processing a payment information by using a card reader formed of a connector connected communicable with an external terminal, and a reader unit for obtaining a card information, comprising:
a step wherein a key input layer wherein a plurality of keys are arranged for password inputs, is randomly formed and is transmitted to the external terminal;
a step wherein a position information on an inputted IC card password at the key input layer is received from the external terminal;
a step wherein a password inputted from the external terminal is detected by processing the received position information; and
a step wherein a transaction approval request message including the detected password is generated and transmitted to the external terminal.

11. The method of claim 10, further comprising:
a step wherein a payment amount information is received from the external terminal, wherein the transaction approval request text message is generated, in compliance with the EMV standard, to include the IC card information obtained from the reader unit and the payment amount information received from the external terminal, together with the password.

12. A recording medium wherein a program is recorded so as to execute, using a computer, the method of any of claims 10 and 11.
